# EUROPEAN PATENT APPLICATION

(11) **EP 2 669 731 A1**
(43) Date of publication of application: **04.12.2013**
(21) Application number: 12739489.8
(22) Date of filing: 12.01.2012
(51) Int. Cl.: G02C 5/16, G02C 5/20

(54) **GLASSES**

(30) Priority: 27.01.2011 JP 2011014670
(71) Applicant: Midori Anzen Co., Ltd., Tokyo 150-8455 (JP)
(72) Inventor: SUMITOMO, Taro, Shibuya-ku, Tokyo 150-8455 (JP); OKUMA, Wataru, Shibuya-ku, Tokyo 150-8455 (JP); ICHIKAWA, Kanako, Shibuya-ku, Tokyo 150-8455 (JP)
(74) Representative: Grünecker, Kinkeldey, Stockmair & Schwanhäusser
(86) International application number: PCT/JP2012/050519
(87) International publication number: WO 2012/102093

(57) **Abstract**

Grasses 1, in which a temple 3 is provided for an end piece 2 of a front frame 10, includes an intermediate member 5 which is made of an elastic material and is provided between the end piece 2 and the temple 3 with one end connected to the end piece 2 and the other end connected to the temple 3, the elastic material elastically deforming more easily than the end piece 2 and the temple 3.

## Description

### Technical Field

The present invention relates to glasses used for dust prevention, for example, and more specifically, relates to glasses which can be prevented from being broken by the stress of removing or attaching the glasses and can be fitted to the wearer's face with a proper degree of expansion and fastening.

### Background Art

Generally, in glasses such as normal glasses or dust-proof glasses, lenses or protection glasses are provided in a front frame, and temples which can be placed on the temples and over the ears are foldably connected to respective end pieces of the front frame. Each temple has an end connected to the corresponding end piece through an axle piece and is pivoted about the axle piece so as to be folded and unfolded with respect to the end piece. In the case where such glasses are removed or attached with one hand, the case where a person having a wide face wears such glasses, or in the other cases, the temples touch the wearer' s face and are subjected to bending in the direction that the temples open outward. However, the temples cannot open more than a certain degree and could be broken with the excessive stress. Accordingly, developments have been made on the structures allowing the temples to open outward beyond the regular unfolded position thereof.

In the structure described in PTL 1, an elastic arm is provided across the end piece of the front frame and the temple. The elastic arm has an end pivotally supported on the end piece with a screw and extends toward the temple. The other extended end thereof is inserted in the temple to be fixed to the same. With this structure, the elastic arm is bent to cause the temple to open outward when the temple is subjected to a force in the opening direction.

In the structure described in PTL 2, an elastic piece extending towards the end piece is incorporated in the temple, and an arch member which can come into contact with the elastic piece is attached to an end of the end piece. When the temple is moved outward, the elastic piece comes into contact with the arch member and deforms. This allows the temple to open outward.

In the structure described in PTL 3 , an end of the temple on the end piece side is fixed to a spring member with a screw. When the end piece comes into contact with the spring member, the spring member elastically deforms. This elastic deformation allows the temple to open outward.

PTL 1: Japanese Utility Model Publication No. 3135210
PTL 2: Japanese Patent Publication No. 3686292
PTL 3: Japanese Patent Publication No. 2975361

### Summary of Invention

### Problems to be Solved by Invention

In the structure of PTL 1, the elastic arm bends, in the structure of PTL 2, the elastic piece deforms. In the structure of PTL 3, the spring member deforms. In each of the conventional techniques, the elastic member deforms to allow the opening operation of the temples. In such a structure, when the operation or stress of opening the temples exceeds such respective allowable ranges that the elastic member is deformed, the operation or stress is transmitted to the end piece through the elastic member and could break the end piece, or the temple deforms more than necessary and is itself broken. In other words, when more than necessary stress acts on the temples, either the end pieces or temples could be broken.

Accordingly, an object of the present invention is to provide glasses in which both of the end pieces and temples can be prevented from being broken with excessive stress of the opening operation of the temples.

### Means for Solving Problems

An invention according to claim 1 is glasses with a temple provided for an end piece of a front frame, the glasses including: an intermediate member which is made of an elastic material and is provided between the end piece and the temple with one end connected to the end piece and the other end connected to the temple, the elastic material elastically deforming more easily than the end piece and the temple.

An invention according to claim 2 is the glasses according to claim 1, in which the one end of the intermediate member is integrally connected to the end piece, and the other end of the intermediate member is connected to the temple, the temple being foldable, and the intermediate member can be detached from the end piece or temple upon elastic deformation of the intermediate member.

An invention according to claim 3 is the glasses according to claim 2, in which a joint member supporting the folding operation of the temple is provided between the other end of the intermediate member and the temple; and an angle adjustment mechanism which is capable of adjusting an angle of the temple in the top-bottom direction is provided between the joint member and the temple.

An invention according to claim 4 is the glasses according to any one of claims 1 to 3, in which the front frame, end piece, temple, and intermediate member are made of synthetic resin.

### Effects of Invention

The intermediate member provided between the end piece and temple elastically deforms more easily than the end piece and temple. Accordingly, if the temple is subjected to an excessive opening operation, the intermediate member elastically deforms preferentially, and the temple is opened. When the intermediate member elastically deforms by a large amount, the intermediate member is detached from the end piece and temple. Accordingly, stress does not act on the end piece and temple any more.

### Brief Description of Drawings

Fig. 1 is an entire perspective view of glasses of an embodiment of the present invention.
Fig. 2 is a front view of the glasses.
Fig. 3 is a plan view of the glasses.
Fig. 4 is a bottom view of the glasses.
Fig. 5 is a right side view of the glasses.
Fig. 6 is a back view of the glasses.
Fig. 7 is a perspective view of a front frame included in the glasses of the embodiment of the present invention.
Fig. 8 is a front view of the front frame.
Fig. 9 is a left side view of the front frame.
Fig. 10 is a perspective view of an intermediate member included in the glasses of the embodiment of the present invention.
Fig. 11 is a plan view of the intermediate member.
Fig. 12 is a side view of the intermediate member.
Fig. 13 is a front view of the intermediate member.
Fig. 14 is a perspective view of a joint member included in the glasses of the embodiment of the present invention.
Fig. 15 is a plan view of the joint member.
Fig. 16 is a side view of the joint member.
Fig. 17 is a front view of the joint member.
Fig. 18 is a perspective view of a temple included in the glasses of the embodiment of the present invention.
Fig. 19 is a left side view of the temple.
Fig. 20 is a front view of the temple.
Fig. 21 is a plan view of the temple.
Fig. 22 is a side view illustrating the connection of the end piece, intermediate member, and temple.
Fig. 23 is a cross-sectional view taken along a line M-M of Fig. 22.
Fig. 24 is a cross-sectional view taken along a line N-N of Fig. 22.
Fig. 25 is a view illustrating a connection between the end piece and the intermediate member according to a modification, Fig. 25 corresponding to Fig. 23.
Fig. 26 is a view illustrating a connection between an intermediate member and a temple with an end piece according to another modification.
Fig. 27 is a view illustrating the method of measuring the spring property in the opening operation of the temple of the glasses.
Fig. 28 is a view illustrating the method of measuring the spring property in the opening operation of the temple of the glasses.
Fig. 29 is a diagram showing the questionnaire results from wearers of glasses.

### Modes for Carrying out Invention

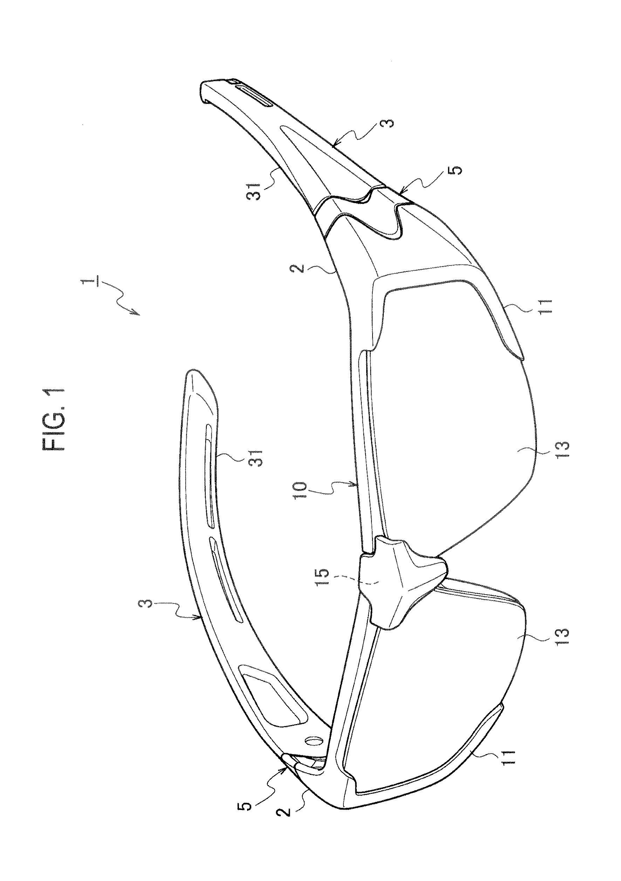

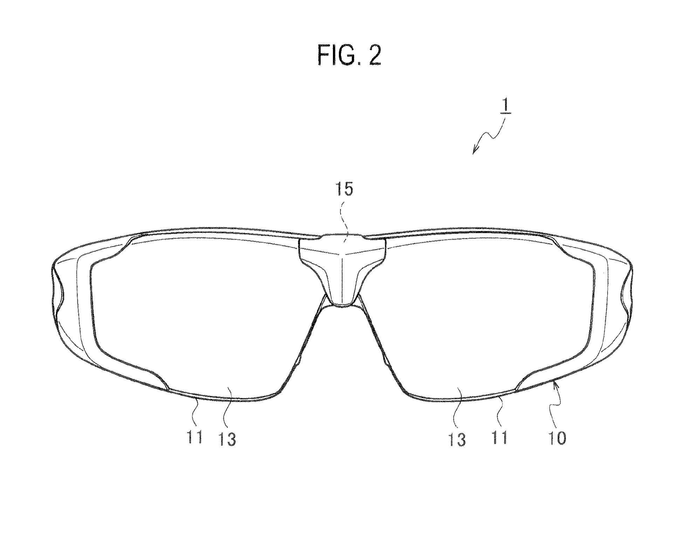

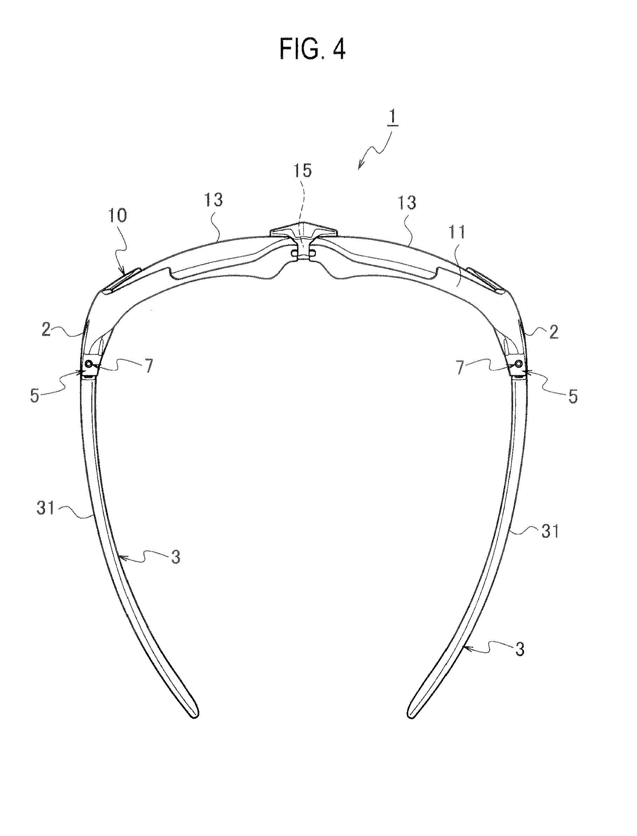

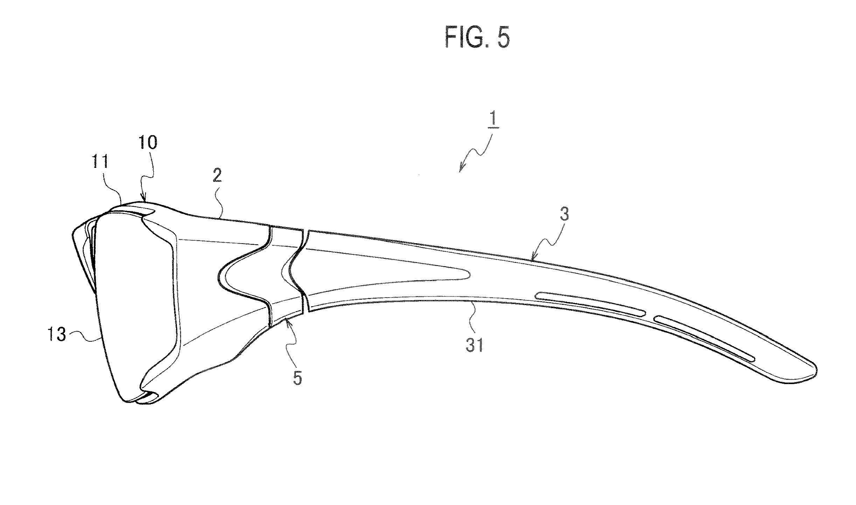

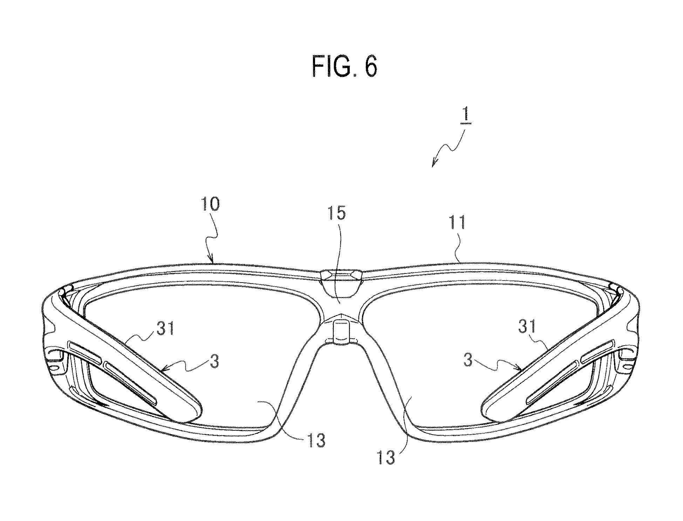

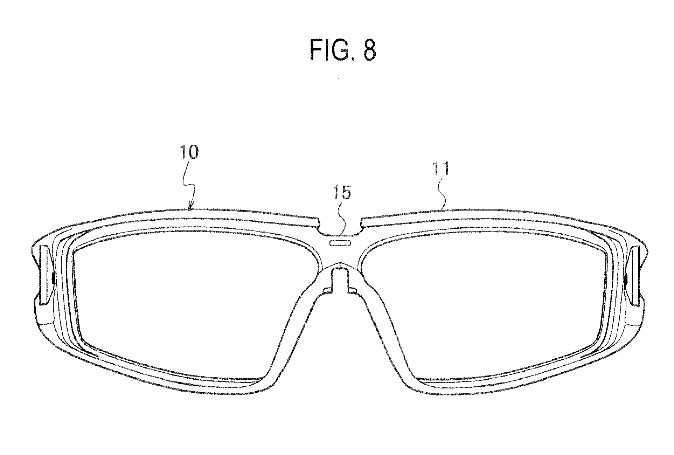

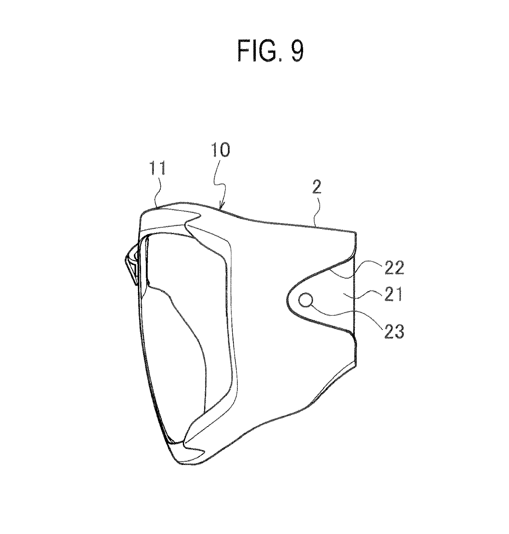

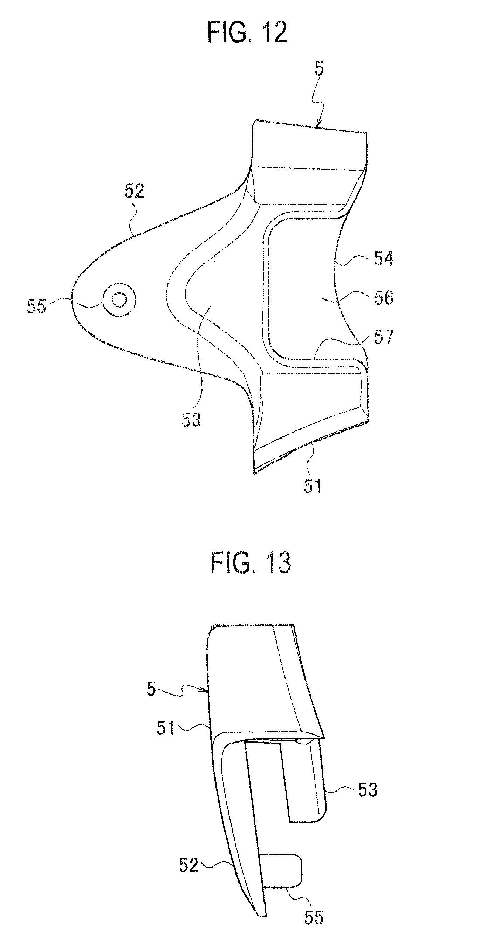

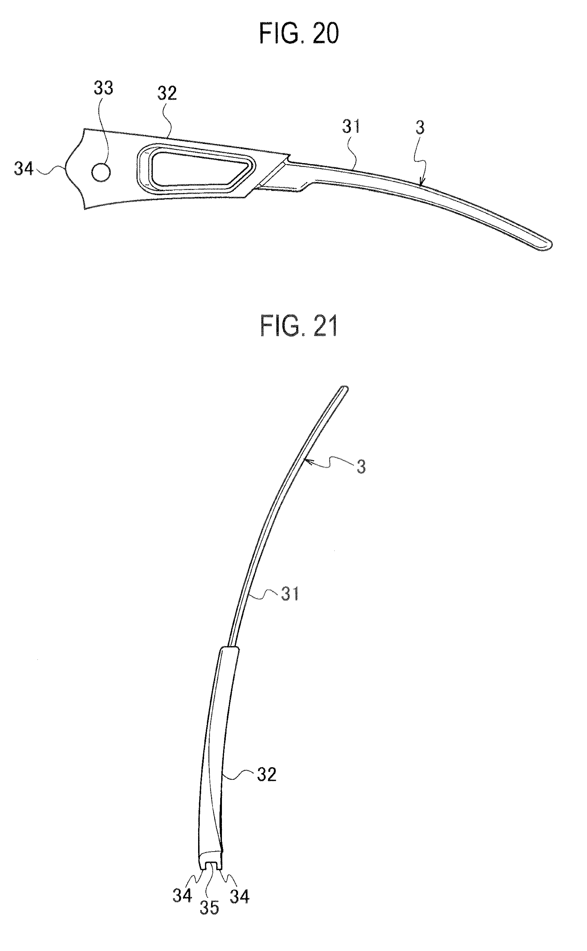

Hereinafter, with reference to Figs. 1 to 24, a description is given of glasses 1 according to an embodiment of the present invention.

Glasses 1 of the embodiment are used for dust prevention, for example. As illustrated in Figs. 1 to 6, the glasses 1 include a front frame 10, a pair of temples 3 provided on both the right and left sides of the front frame 10, and right and left protection glasses 13 through which the wearer sees. In the following description, an end of each part closer to the front frame 10 is referred to as one end or a front end, and the other end thereof closer to the temple 3 is referred to as an other end or rear end (in the front-rear direction), the direction in which the temples 3 are unfolded and opened is referred to as a right-left direction, and the direction orthogonal to the front-rear and right-left directions is referred to as the top-bottom direction.

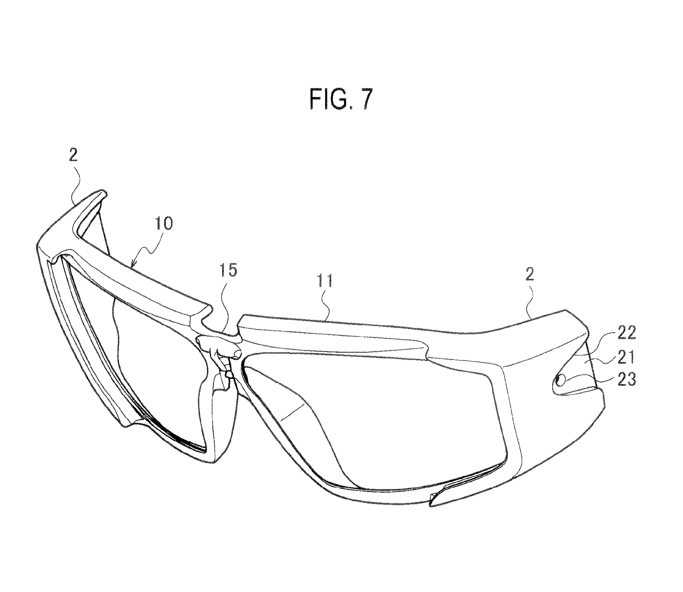

As illustrated in Figs. 7 to 9, the front frame 10 includes right and left rims 11 and a bridge 15 connecting upper portions of the right and left rims 11. The front frame 10 further includes end pieces 2 through which the temples 3 are attached to the front frame 10. The end pieces 2 are integrally formed with the respective right and left rims 11 in such a manner that an end (front end) of each end piece 2 is continuously provided for the corresponding rim 11 and the other end (rear end) extends to the rear part of the temple 3 (see Figs. 1 to 6).

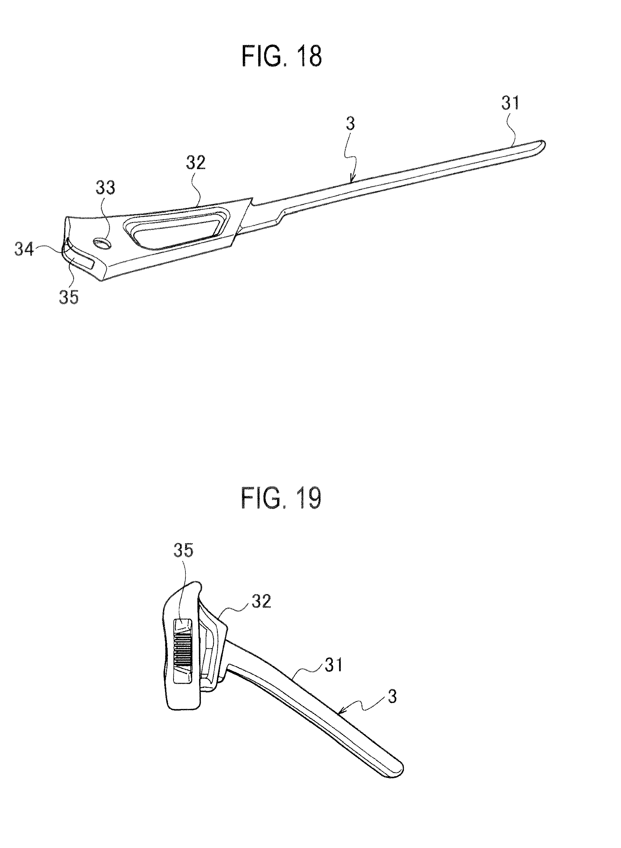

As illustrated in Figs. 18 to 21, the temple 3 is composed of a temple body portion 31 which can be placed on a temple or over an ear and a joint portion 32 integrally formed on an end (front end) of the temple body portion 31 in the longitudinal direction thereof. In the joint portion 32, a later-described joint member 7 is inserted. To connect the joint member 7 and the joint portion 32, the joint portion 32 is provided with a second axle hole 33.

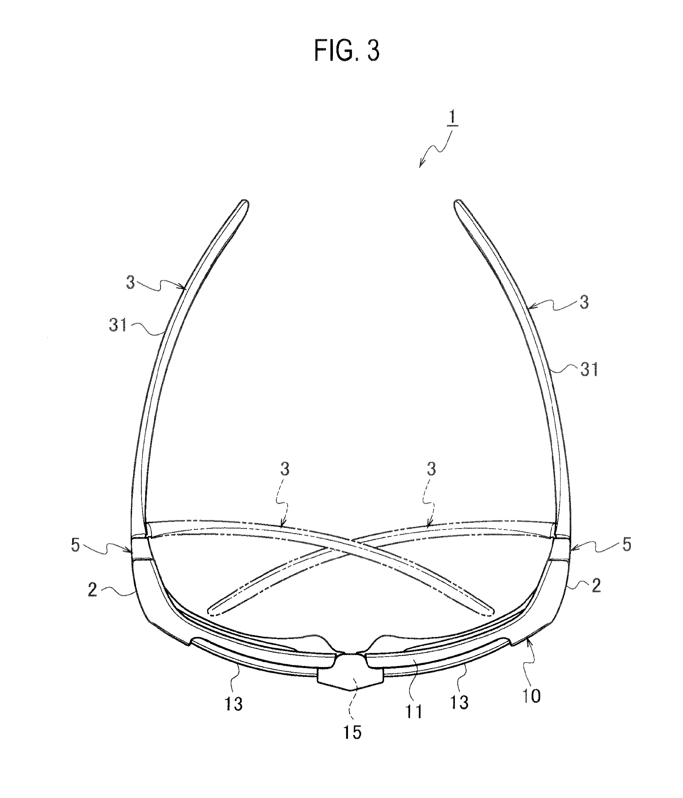

As illustrated in Figs. 1 and 3, the temples 3 are foldably attached to the respective end pieces 2 through the respective intermediate members 5. The solid line state of Fig. 3 illustrates the state where the glasses 1 are in use with the temples 3 being unfolded, and the chain line state (the state indicated by the dashed-two dotted lines) illustrates the state where the glasses 1 are not in use with the temples 3 being folded (the accommodated state). The temples 3 pivot between the solid state and chain line state to be unfolded and folded with respect to the respective end pieces 2 through the respective intermediate members 5.

The intermediate members 5 are connected and fixed to the respective end pieces 2. Herein, the connection of the intermediate members 5 being fixed refers to the connection in which each intermediate member 5 is integrally connected to the corresponding end piece 2 at a fixed position so as not to move relative to the end piece 2. In order to integrally connect the intermediate member 5 to the corresponding end piece 2, a U- or V-shaped insertion recess 22 is formed on the other end (see Fig. 7). Moreover, a plate-shaped fixing piece 21 is formed in the insertion recess 22 (see Fig. 7). The thickness of the fixing piece 21 (the size in the right-left direction) is smaller than that of the other part of the end piece 2.

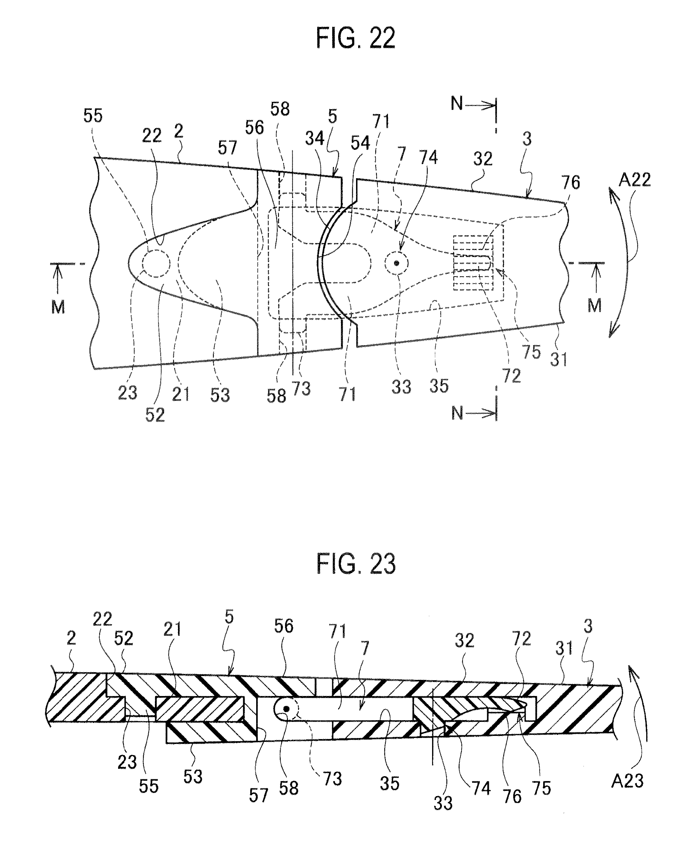

As illustrated in Fig. 23, the fixing piece 21 is inserted into the intermediate member 5 so as to be sandwiched by the intermediate member 5. Moreover, in the insertion recess 22, a part of the intermediate member 5 is inserted. The intermediate member 5 is thus connected and fixed to the end piece 2. Moreover, a boss hole 23 penetrates the fixing piece 21 in the thickness direction.

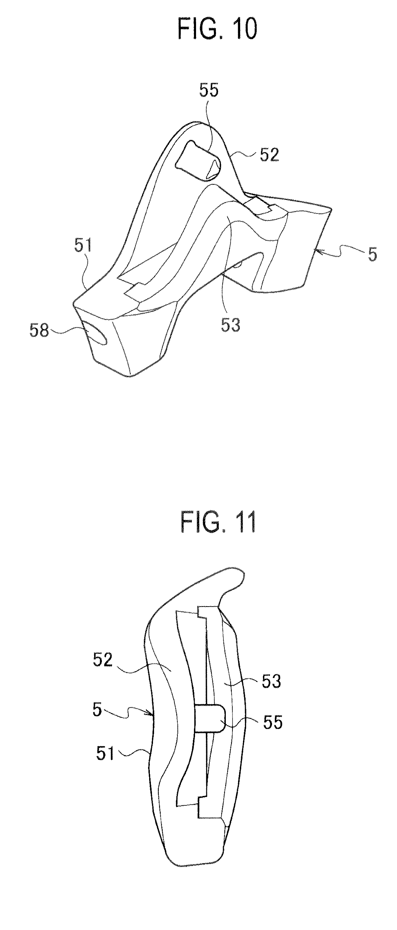

The intermediate member 5 illustrated in Figs. 10 to 13 is composed of a body portion 51, a pair of sandwiching pieces 52 and 53, and an arc concave portion 54, and a boss 55. The body portion 51 is sandwiched between the end piece 2 and temple 3 (see Fig. 22 and the like). The sandwiching pieces 52 and 53 are integrally molded at the one end of the body portion 51, which is the side closer to the end piece 2. The concave portion 54 is concaved at the other end of the body portion 51, which is the side closer to the temple 3. The boss 55 is columnar, for example, and is provided for the one sandwiching piece 52. The sandwiching pieces 52 and 53 face each other, and the sandwiching piece 52 protrudes from the body portion 51 more than the sandwiching piece 53.

As illustrated in Figs. 22 and 23, the one sandwiching piece 52 is inserted into the insertion recess 22 of the end piece 2. Upon this insertion, the pair of sandwiching pieces 52 and 53 sandwich the fixing piece 21 of the end piece 2 on both the right and left sides. At this time, the boss 55 enters the boss hole 23, which is formed in the fixing piece 21 of the end piece 2, and is engaged with the same. The intermediate member 5 is thus connected and fixed to the one end of the end piece 2.

As described above, when the intermediate member 5 is connected to the end piece 2, the sandwiching piece 52 is located outside of the glasses 1 in the right-left direction while the sandwiching piece 53 is located inside of the glasses 1. In the structure where the boss 55 is inserted into and engaged with the boss hole 23, if the temple 3, intermediate member 5, and end piece 2 are subjected to a large external force, the intermediate member 5 elastically deforms to disconnect the connection between the intermediate member 5 and end piece 2. Specifically, in Fig. 23, when the temple 3 is pivoted largely in the direction indicated by an arrow A23 with the end piece 2 fixed (when the temple 3 is subjected to a rotation moment indicated by the arrow A23), the intermediate member 5 elastically deforms and is detached from the end piece 2.

Accordingly, the intermediate member 5 can be assembled to the end piece comparatively easily. Moreover, the end piece 2, intermediate member 5, and temple 3 are less likely to be broken by a large external force applied to the temple 3.

The arc-shaped concave portion 54 is formed so as to face arc-shaped convex portion 34 formed at the one end of the temple 3. By designing the concave and convex portions 54 and 34 to face each other, the angle of the temple 3 in the top-bottom direction can be smoothly adjusted. Specifically, the temple 3 is configured to pivot about the central axis of a second axle portion 74 illustrated in Fig. 22 within a range of angle of about 1 to 10 degrees, for example, in the direction indicated by the arrow A22 relative to the intermediate member 5 (end piece 2) .

To be specific, the body portion 51 of the intermediate member 5 includes: a pair of body portion pieces 56 provided in the upper and lower sides; and a U-shaped joint recess portion 57 formed between the body pieces 56. The joint recess portion 57 is composed of a thin wall in one side of the body portion 51 (in the side closer to the center of the glasses 1 in the right-left direction) and is provided between the body portion pieces 56 in the top-bottom direction. The body portion pieces 56 are sandwiched between the end piece 2 and temple 3. The joint recess portion 57 is a portion for connecting the intermediate member 5 to the temple 3. Into the joint recess portion 57, the joint member 7 is inserted to connect the intermediate member 5 and temple 3. To connect the joint member 7 and the joint recess portion 57, first axle holes 58 are included in the opposing surfaces of the body portion pieces 56 located on both sides of the joint recess portion 57.

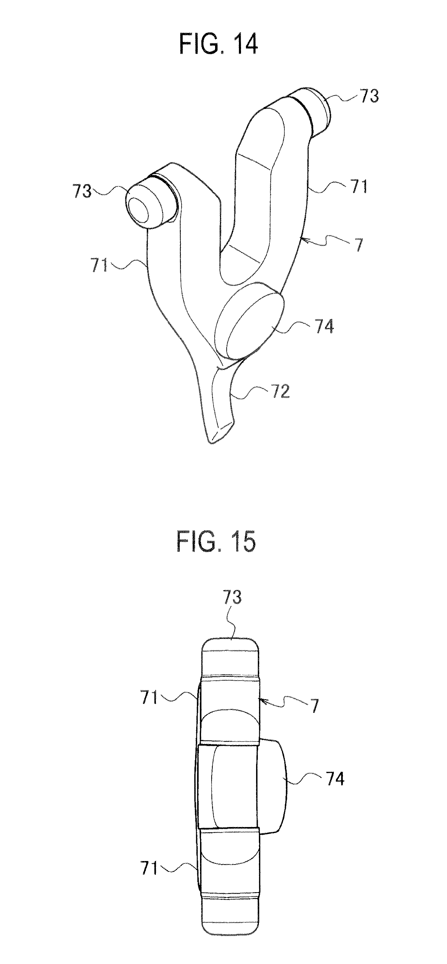

The joint member 7 illustrated in Figs. 14 to 17 has a shape of Y in a side view. The joint member 7 is composed of forked joint arm portions 71 on the intermediate member 5 side (the one side) and an adjustment arm portion 72 on the temple 3 side (the other side) and is integrally molded. The joint member z is placed so as to be laid across the intermediate member 5 and temple 3. The joint arm portions 71 are located on the intermediate member 5 side, and the adjustment arm portion 72 is located on the temple 3 side. The joint member 7 is entirely inserted in a plate-shaped hole (slit hole) 35, which is formed in the joint portion 32 of the temple 3 and has a predetermined depth, and the joint recess portion 57 of the intermediate member 5 so as to be laid across the temple 3 and intermediate member 5.

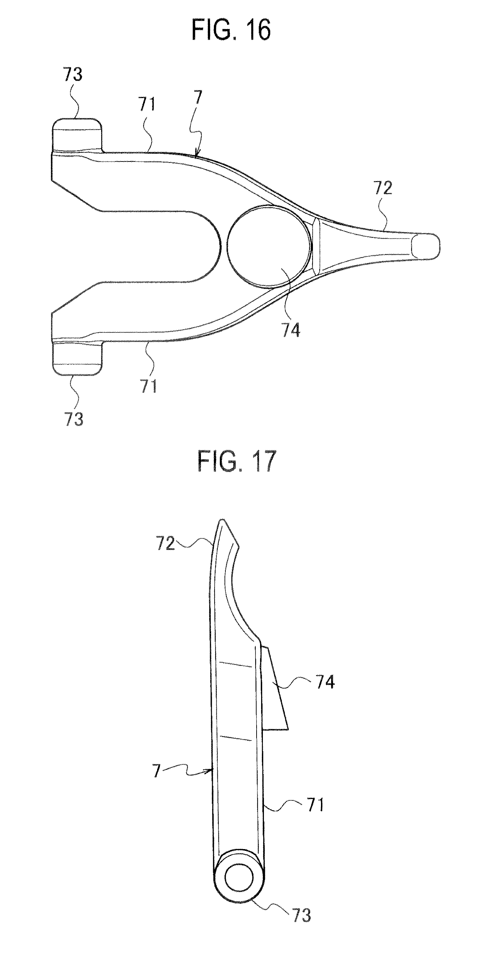

As illustrated in Figs. 22 and 23, the forked joint arm portions 71 are inserted into the joint recess portion 57 of the intermediate member 5. On each joint arm portion 71, a first axle portion 73, which is columnar, for example, is formed. The first axle portion 73 protrudes in the top-bottom direction orthogonal to the length direction (see Figs. 22 and 16). The first axle portions 73 are inserted into the respective first axle holes 58 of the intermediate member 5. By this insertion, the joint member 7 (that is, the temple 3) can be pivotally connected to the intermediate member 5. The central axis of the first axle portion 73 extends substantially in the top-bottom direction and serves as the center of pivot when the temple 3 is unfolded and folded. In other words, in the operation of unfolding or folding the temple 3, the first axle portions 73 rotate relative to the respective first axle holes 58, and by this rotation, the temple 3 pivots in the operation direction.

In the connection structure where the first axle portions 73 are inserted into and engaged with the respective first axle holes 58, if the intermediate member 5, joint member 7, and the like are subjected to a large external force, the intermediate member 5 elastically deforms, and the connection between the intermediate member 5 and joint member 7 (temple 3) is disconnected. Accordingly, the joint member 7 can be assembled to the intermediate member 5 comparatively easily, and the end piece 2, intermediate member 5, temple 3, and joint member 7 are less likely to be broken by a large external force applied to the temple 3 or the like.

At the boundary between the joint arm portions 71 and adjustment arm portion 72 in the joint member 7, the second axle portion 74, which is columnar, for example, protrudes in the right-left direction. The second axle portion 74 is inserted into a second axle hole 33 formed in the joint portion 32 of the temple 3. By the insertion of the second axle portion 74, the temple 3 can pivot about the central axis of the second axle portion 74 in the top-bottom direction relative to the intermediate member 5 (end piece 2). Accordingly, the angle of the temple 3 in the top-bottom direction can be changed with respect to the end piece 2.

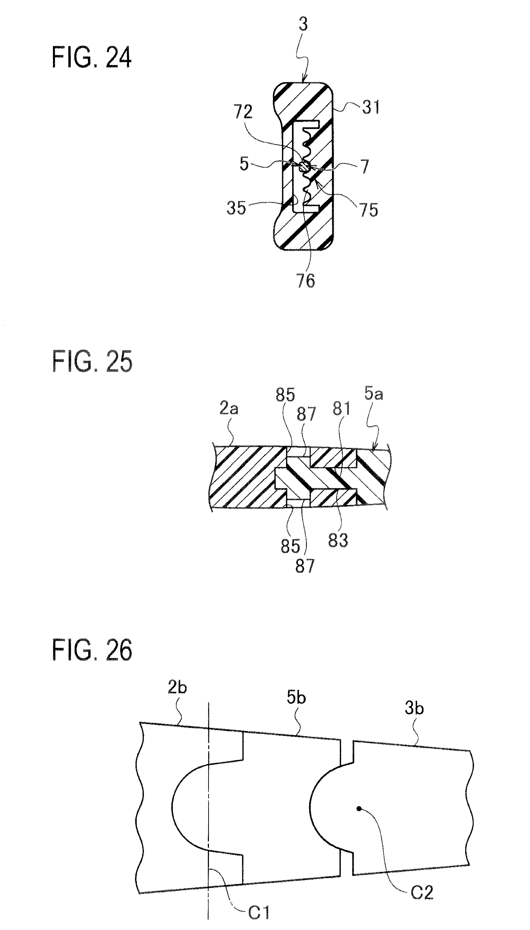

As for changing the angle of the temple 3 in the top-bottom direction, the angle can be adjusted by an angle adjustment mechanism (a ratchet mechanism) 75 (see Fig. 22 and the like). The angle adjustment mechanism 75 is composed of an other end (a pawl portion) of the adjustment arm portion 72 and a gear portion (teeth of the ratchet) 76 facing the other end of the adjustment arm portion 72 (see Fig. 24). The gear portion 76 is formed along the inner surface of the slit hole 35 of the temple 3 in the top-bottom direction. The other end of the adjustment arm portion 72 has a sharp top which can be engaged with the gear portion 76. When the temple 3 is pivoted in the top-bottom direction about the center of the second axle portion 74 to change the position of the proximal end of the adjustment arm portion 72 relative to the gear portion 76, the temple 3 stops at a certain position in the top-bottom direction. The angle of the temple 3 in the top-bottom direction can be thus adjusted. For the angle of the temple 3 in the top-bottom direction can be adjusted, the position of the temple 3 relative to the end piece 2 (front frame 10) in the top-bottom direction can be adjusted. This can individualize the fit of the glasses 1, thus improving the individual wearing comfort thereof.

In the above-described structure, the intermediate members 5 are entirely made of an elastic material which elastically deforms more easily than the end pieces 2, temples 3, and joint members 7. The elastic material of the intermediate members 5 can be polyamide resin and particularly nylon 66 when the end pieces 2, temples 3, and joint members 7 are molded with polycarbonate resin. Furthermore, the intermediate members 5 are preferably made of water absorbing nylon 66.

Polycarbonate resin has a flexural modulus of about 2.30 to 2.50 GPa, for example. On the other hand, water-absorbing nylon 66 has a flexural modulus of about 1.1 GPa and elastically deforms more easily than polycarbonate resin. nylon 66 does not easily release water that nylon 66 once absorbs. The absorption of water in nylon 66 is implemented by adding a water absorption step for nylon 66 in the manufacturing process of the glasses 1, for example.

For the intermediate member 5 is made of nylon 66, which elastically deforms more easily than the end piece 2, temple 3, and joint member 7, the intermediate member 5 elastically deforms in preference to the temple 3 and end piece 2 when the temple 3 is operated to be opened and the opening action acts on the temple 3. If the opening action of the temple 3 is performed with an excessive stress enough to deform the temple 3, the intermediate member 5 further elastically deforms preferentially before the temple 3 deforms.

When the intermediate member 5 elastically deforms in such a manner, the boss 55 and boss hole 23 are disengaged from each other, or the first axle portion 73 and first axle hole 58 are disengaged from each other. Alternatively, both the connection between the boss 55 and boss hole 23 and the connection between the first axle portion 73 and first axle hole 58 are disengaged. The intermediate member 5 is therefore detached from one of or both of the end piece 2 and temple 3. Upon the detachment, the end piece 2 is disconnected from the temple 3 , so that excessive stress does not work any more. This prevents the end piece 2 (front frame 10) and temple 3 from both breaking. At the same time, the excessive stress does not act on the intermediate member 5 any more, and the intermediate member 5 is therefore prevented from breaking. After the temple 3 is disconnected from the end piece 2, the disengaged portion (the boss 55 or first axle portion 73) can be engaged again and restored to the original state. Accordingly, the glasses 1 can be used again.

Moreover, as described above, in the case where the intermediate members 5 are made of nylon 66 which elastically deforms easily, if the temples 3 are opened with an allowable range of stress enough to keep the aforementioned connection from being not disconnected, the intermediate members 5 elastically deform in the opening direction. This increases the opening angle of the temples 3, and the temples 3 can be opened so as to fit to the face size. Accordingly, different persons can wear the same glasses 1 without experiencing any uncomfortable feeling.

In addition, in this embodiment, the front frame 10, end pieces 2, temples 3, intermediate members 5, and joint members 7 are made of synthetic resin. Specifically, all of the constituent members constituting the glasses 1 are made of synthetic resin, and no constituent members of the glasses 1 are made of metal. Accordingly, it is unnecessary to separate the glasses 1 for disposal, and the glasses 1 can be easily disposed of and can be easily reproduced.

In this embodiment, the intermediate member 5 may be made of an elastic material which elastically deforms more easily than the end pieces 2, temples 3, and joint members 7. When the end pieces 2, temples 3, and joint member 7 are made of resin other than polycarbonate resin, the intermediate member 5 may be made of resin other than nylon 66. Moreover, the intermediate member 5 is connected to the end piece 2 with the boss 55 and boss hole 23, and the intermediate 5 is connected to the joint member 7 with the first axle portion 73 and first axle hole 58. However, these connected portions may be disconnected by elastic deformation of the intermediate member 5 and are not limited to the structure illustrated in the drawings. Furthermore, the temple 3 may be directly connected to the intermediate member 5 without using the joint member 7.

Herein, a description is given of a test for the opening operation of the temples 3 of the glasses 1 and the like.

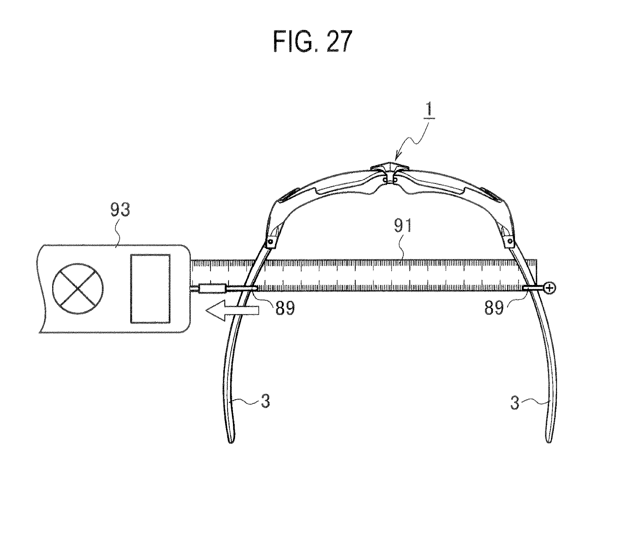

First, a description is given of the method of testing the opening operation of the temple 3 of the glasses 1 with reference to Fig. 27. In the temple 3, marks 89 are written with a pen at about 5 cm from the hinge (the first axle portion 75). The temples 3 are unfolded and placed on a ruler 91, and the distance between the pair of marks 89 (the distance inside the pair of temples 3) is measured.

One of the temples 3 is fixed to the ruler 91. The other unfixed temple 3A is caught with a hook of a push-pull gauge 93 and is pulled slowly in the direction that the pair of temples 3 is opened (in such a direction that the distance between the pair of temples increases) . If the hook of the push-pull gauge 93 slips on the temple 3 , rubber band is wound around the temples 3, or some other treatments are made.

The value of the push-pull gauge 93 (the value of tensile force by the push-pull gauge 93) reads each time the amount of expansion from the reference value (an increase in distance between the pair of marks 89; change in distance between the temples 3) is increased by 5 mm. The reference value is a distance between the pair of temples 3 when the tensile force by the push-pull gauge 93 is 0.

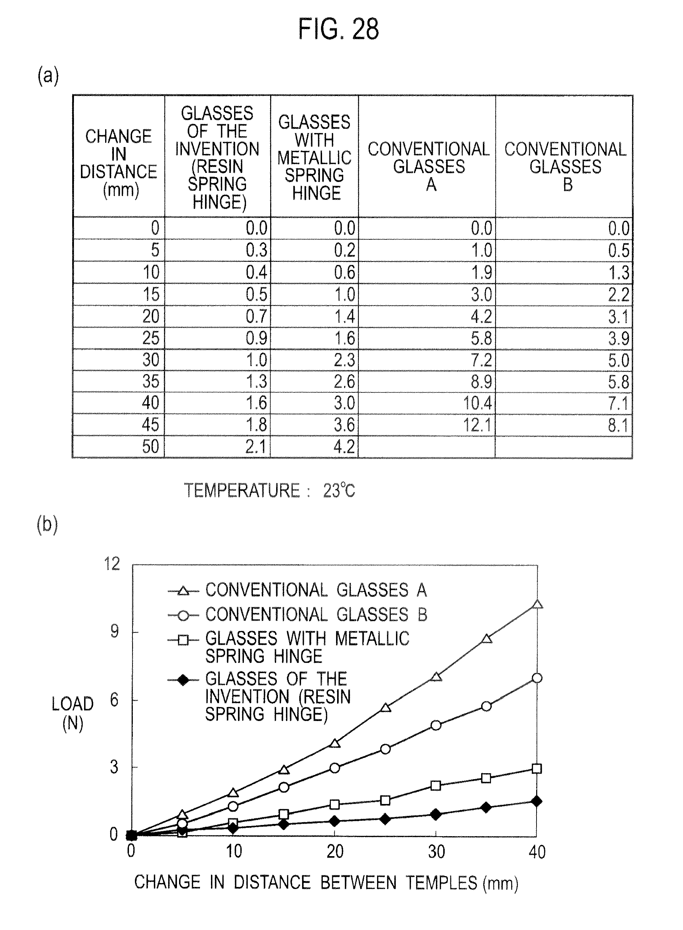

Next, a description is given of the results of the test for the opening operation of the temples 3 of the glasses 1 with reference to Fig. 28. The test was performed for some type of glasses in addition to the glasses 1 according to the embodiment of the present invention.

Fig. 28A is a table showing the numerical results of the test, and Fig. 28B is a graph showing the test results.

The "GLASSES OF THE INVENTION" shows the glasses 1 according to the embodiment; "GLASSES WITH METALLIC SPRING HINGE", glasses described in Japanese Patent Laid-open publication No. 11-295663; "CONVENTIONAL GLASSES A", glasses described in Japanese Patent Laid-open publication No. 2011-186207; and "CONVENTIONAL GLASSES B", normal protection glasses in which end pieces made of resin and temples made of resin are connected with metallic hinges.

As for all the four types of glasses, as the temples were opened (as the distance between the pair of marks 89 of the temples increased), the load on the temples (the tensile force by the push-pull gauge 93) increased. However, in the glasses 1 according to the embodiment of the present invention, as apparent from Fig. 28B, the load increased more gradually than that of the conventional glasses (the other three types of glasses) with the change in distance between the temples.

As described above, the glasses 1 according to the embodiment of the present invention can be opened so as to fit the temples 3 to the face size. Accordingly, wearers varying in face width can wear the same glasses 1 without experiencing uncomfortable feeling.

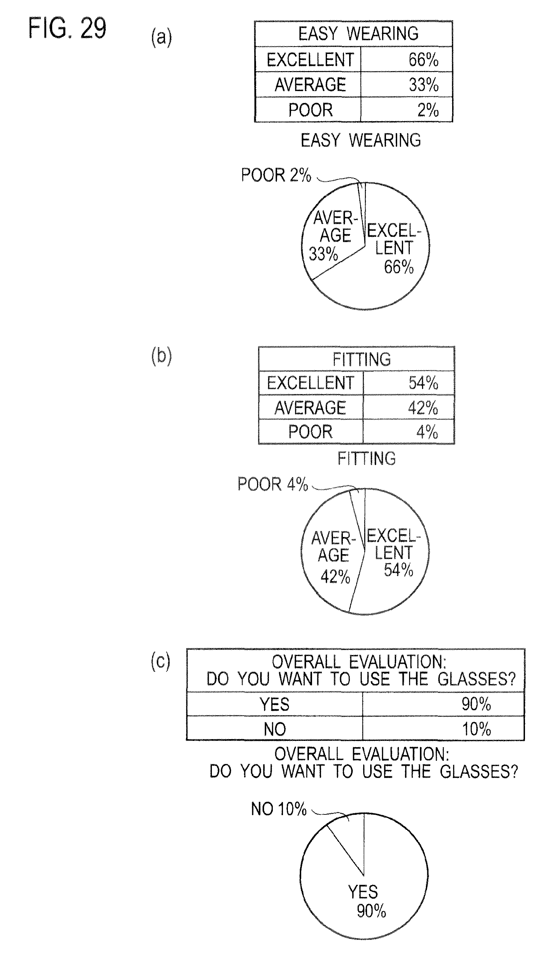

The questionnaire results of Fig. 29 are results of the sensory test of the glasses 1 according to the embodiment of the present invention. Most of the total 60 wearers found that the glasses 1 had a good feel in terms of handling and fitting. On the other hand, 10% of the wearers answered that the wearers did not want to use the glasses 1 in the overall evaluation. These answers were made because the wearers concerned about how the wearers looked with the glasses 1 on.

By the way, when the intermediate members 5 is provided for the end pieces 2 in the glasses 1 according to the embodiment of the present invention, a part of each intermediate member 5 sandwiches a part of the corresponding end piece 2 in the above description. As illustrated in Fig. 25, the glasses 1 may be configured so that a part of an end piece 2a sandwiches a part of an intermediate member 5a.

Specifically, a hole 81 having a predetermined depth is formed at the rear end of the end piece 2a, and a protrusion piece 83 is provided in the front part of the intermediate member 5a. A part of the intermediate member 5a is sandwiched by a part of the end piece 2a with the protrusion piece 83 being inserted into the hole 81A.

In this case, to prevent the intermediate member 5a from easily falling off the end piece 2a, it is desirable that a columnar engagement piece 87 which is provided in the middle of the protrusion piece 83 in the protruding direction is inserted into another hole 85 which is formed in the middle of the hole 81 in the depth direction.

In the above description, moreover, the temple 3 pivots relative to the intermediate member 5 about an axis extending in the top-bottom direction (the central axis of the first axle portion 73) as illustrated in Fig. 3 and slightly pivots relative to the intermediate member 5 about the axis extending in the right-left direction (the central axis of the second axle portion 74) . However, the position of the central axis of pivot of a temple 3b relative to an end piece 2b may be properly set as illustrated in Fig. 26.

Specifically, the grasses 1 may be configured so that an intermediate member 5b pivots relative to the end piece 2b about an axis (an axis extending substantially in the top-bottom direction) C1 while the temple 3b slightly pivots relative to the intermediate member 5b about an axis (an axis extending substantially in the right-left direction) C2.

### Explanation of Reference Numerals and Symbols

1, GLASSES
2, END PIECE
3, TEMPLE
5, INTERMEDIATE MEMBER
7, JOINT MEMBER
10, FRONT FRAME
23, BOSS HOLE
55, BOSS
58, FIRST AXLE HOLE
73, FIRST AXLE PORTION

## Claims

1. Glasses with a temple provided for an end piece of a front frame, the glasses comprising:
an intermediate member which is made of an elastic material and is provided between the end piece and the temple with one end connected to the end piece and the other end connected to the temple, the elastic material elastically deforming more easily than the end piece and the temple.

2. The glasses according to claim 1, wherein
the one end of the intermediate member is integrally connected to the end piece, and the other end of the intermediate member is connected to the temple, the temple being foldable, and
the intermediate member can be detached from the end piece or temple upon elastic deformation of the intermediate member.

3. The glasses according to claim 2, wherein
a joint member supporting the folding operation of the temple is provided between the other end of the intermediate member and the temple, and
an angle adjustment mechanism which is capable of adjusting an angle of the temple in the top-bottom direction is provided between the joint member and the temple.

4. The glasses according to any one of claims 1 to 3, wherein
the front frame, end piece, temple, and intermediate member are made of synthetic resin.
